Europäisches Patentamt

European Patent Office

Office européen des brevets

(11) Numéro de publication: **0 057 154**
**A1**

## (12) DEMANDE DE BREVET EUROPEEN

(21) Numéro de dépôt: 82630005.5

(22) Date de dépôt: 15.01.82

(51) Int. Cl.³: **B 60 R 1/08**

(30) Priorité: 27.01.81 LU 83098

(43) Date de publication de la demande:
04.08.82 Bulletin 82/31

(84) Etats contractants désignés:
BE CH DE FR GB IT LI SE

(71) Demandeur: MICROTECHNIC S.A.
5 rue de l'Industrie
Monaco(MC)

(72) Inventeur:
Les inventeurs ont renonce a leur designation

(74) Mandataire: Waxweiler, Jean et al,
OFFICE DENNEMEYER S.à.r.l. 21-25 Allée Scheffer
P.O.Box 41
Luxembourg(LU)

(54) Rétroviseur avec positions jour et nuit.

(57) Un élément réflecteur (12), logé dans un boîtier est formé d'un prisme optique (12) de section triangulaire et a un axe de rotation (19) perpendiculaire à sa section triangulaire. Cet axe est formé par deux pivots (18) faisant corps avec le prisme, chacun sur une de ses bases triangulaires. Un point de commande (20) faisant corps avec le prisme est situé par rapport au dit axe (19) de sorte à permettre de basculer le prisme (12) entre les positions jour et nuit par application d'une force en ce point de commande (20).

./...

Croydon Printing Company Ltd.

COMPLETE DOCUMENT

FIG. 1

RETROVISEUR AVEC POSITIONS JOUR ET NUIT.

La présente invention concerne un rétroviseur avec positions jour et nuit comprenant un boîtier    dans lequel est logé un élément réflecteur.

Différents rétroviseurs de ce genre sont connus comprenant un miroir plan devant lequel est placé un verre plat. En général le miroir ou le verre peuvent être basculés à l'aide d'un système de manipulation dans une position dans laquelle les phares d'une voiture suiveuse n'éblouissent plus le conducteur, mais dans laquelle le trafic derrière sa voiture peut encore être suffisamment observé dans le rétroviseur par le conducteur. Le verre plat et le miroir doivent être enchassés dans un chassis suspendu dans le boîtier du rétroviseur, afin de pouvoir les basculer à l'aide du système de manipulation dans la position où il n'y a plus d'éblouissement du conducteur par les phares d'une voiture suiveuse et celle où une observation normale du trafic derrière la voiture est possible dans le miroir de nuit.

Le but de l'invention est de fournir un rétroviseur simplifié dont l'élément réflecteur peut être oscillé directement dans son boîtier.

Le but est réalisé à l'aide d'un rétroviseur comprenant un prisme optique de section triangulaire faisant fonction d'élément réflecteur, un axe de rotation perpendiculaire à la section triangulaire du prisme et formé par deux pivots faisant corps avec le corps du prisme chacun sur une des bases triangulaires du prisme et un point de commande faisant corps avec le prisme et situé par rapport audit axe de sorte à permettre de basculer le prisme entre les positions jour et nuit par application d'une force de commande audit point de commande.

Le point de commande peut être une projection sur une arrête ou face du prisme opposée audit axe de rotation.

Le rétroviseur peut comprendre dans un mode de réalisation une manette pivotable comprenant à une extrémité un axe de rotation creux parallèle audit axe de rotation du prisme et muni d'une fente en direction axiale, ladite manette étant logée dans ledit boîtier de sorte que ladite fente et le creux dudit axe reçoivent ledit point de commande et la rotation de ladite manette autour de son axe de rotation fait basculer ledit prisme autour de son axe de rotation de la position nuit dans la position jour et vice-versa.

Dans un autre mode de réalisation le rétroviseur peut comprendre une coulisse à commande manuelle mobile en direction de l'axe de rotation du prisme entre deux positions extrêmes, et une gorge dans ladite coulisse oblique par rapport à la direction de déplacement de ladite coulisse, ladite gorge recevant ledit point de commande.

Si le rétroviseur est un rétroviseur extérieur le point de commande peut être formé par un prolongement d'un desdits pivots auquel ladite force de commande est appliquée.

Afin de limiter les angles morts, au moins une partie latérale du prisme peut faire un léger angle avec le restant de prisme.

L'invention offre l'avantage de réaliser l'élément réflecteur du rétroviseur sous forme de prisme muni de deux axes et d'un point de commande permettant ainsi l'oscillation directe du prisme dans son boîtier qui est de ce fait considérablement simplifié et allégé.

L'invention sera maintenant décrite avec référence aux dessins annexés dans lesquels:

La figure 1 représente une vue de face le prisme optique selon l'invention servant d'élément réflecteur ou miroir d'un rétroviseur;

la figure 2 représente une vue de côté prisme de la figure 1;

la figure 3 représente une section d'un rétroviseur utilisant le prisme optique de la figure 1, le prisme se trouvant dans la position "jour";

la figure 4 représente la même section que la figure 3 d'un rétroviseur, le prisme se trouvant dans la position "nuit";

la figure 5 représente une vue de face d'un rétroviseur utilisant un prisme selon la figure 1, mais une commande manuelle différente;

la figure 6 représente en perspective l'élément de commande du rétroviseur de la figure 5;

la figure 7 représente une section selon la ligne VII-VII du rétroviseur de la figure 1, le prisme se trouvant dans la position "nuit",

la figure 8 représente une section selon la ligne VIII-VIII du rétroviseur de la figure 5, le prisme se trouvant dans la position "jour",

les figures 9 et 10 représentent des vues de face et d'en haut d'un mode de réalisation du prisme de la fig.1 avec angle mort réduit, et

les figures 11 à 13 représentent des vues en perspective de face et d'en haut d'un autre mode de réalisation du prisme de la figure 1 avec angle mort réduit .

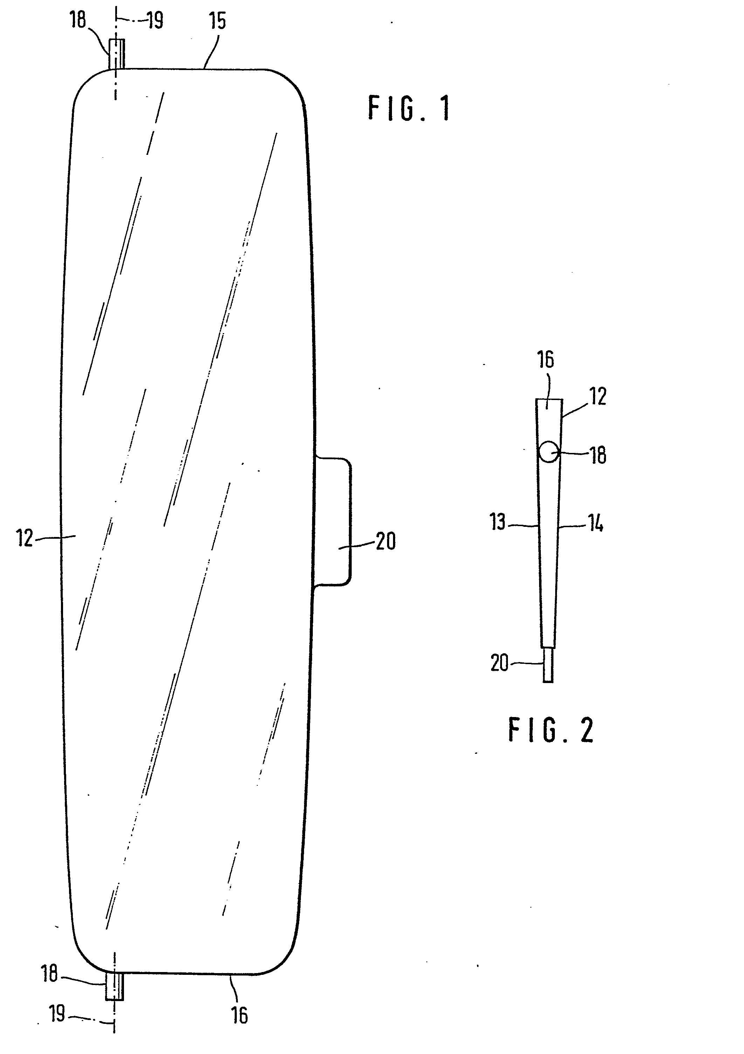

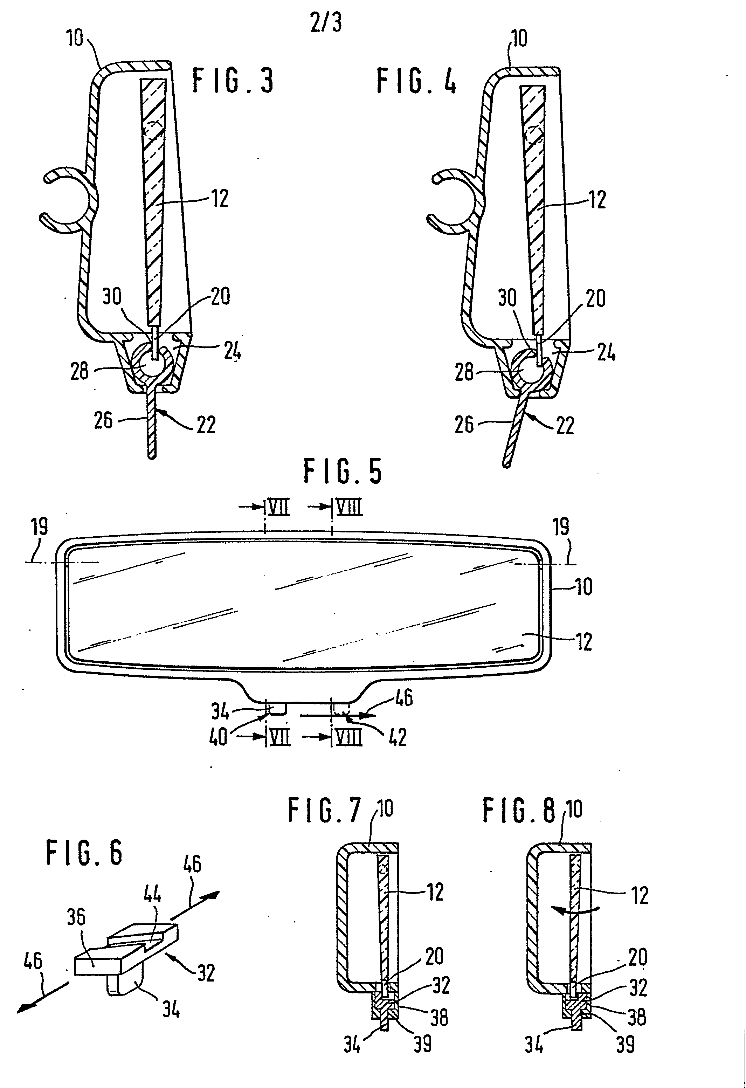

Dans les figures 1 et 2 est représenté en vue de face et vue de côté un prisme optique 12 destiné à être utilisé comme élément réflecteur d'un rétroviseur. Le prisme est de section triangulaire et formé d'une matière plastique transparente de qualité optique. La surface arrière 13 du prisme est munie d'un revêtement réfléchissant pour réfléchir la lumière tombant par la surface antérieure /14 du prisme sur ce revêtement. Il est muni sur chacune de ces bases 15, 16 d'un pivot 18 faisant corps avec le prisme 12. Ces deux pivots 18 sont situés sur une ligne droite et forment un axe de rotation /19 autour duquel le prisme peut être basculé de sa position "jour" dans sa position "nuit" et vice-versa, quand il est monté dans son boîtier 10. Les miroirs anti-éblouissants à positions jour et nuit sont connus dans l'art, et il n'est pas nécessaire de décrire leur fonctionnement qui n'est pas une caractéristique de l'invention. Dans le mode de réalisation représenté, le prisme 12 est en outre pourvu à une de ses arrêtes d'une projection 20 ou point de commande faisant corps avec le prisme 12 et auquel est appliquée une force de commande, quand on veut basculer le prisme 12 d'une position dans une autre. La forme du point de commande 20 dépend du mode de réalisation du moyen de commande du prisme 12.

Lorsque le prisme 12 est utilisé dans un rétroviseur par exemple intérieur, tel que représenté de façon schématique dans les figures 3 et 4, il est logé avec ses deux pivots 18 dans des paliers respectifs (non représentés) du boîtier 10 de façon à pouvoir basculer autour de l'axe de rotation 19 défini par les deux pivots 18.

Le prisme 12 est basculé entre ses deux positions de service qui sont représentées respectivement dans les figures 3 et 4, à l'aide d'une manette 22 logée dans un espace 24 du boîtier 10 au-dessous du prisme 12. La manette 22 comprend une tige 26 et une tête 28, sous forme d'un axe creux, logée dans l'espace 24. La tête 28 est pourvue d'une fente 30 parallèle à l'axe de la tête 28 qui elle s'étend en direction longitudinale du prisme 12 et de son point de commande 20. Le point de commande 20 est reçu dans la fente 30 et l'intérieur creux de la tête creuse 28. La tête 28 de la manette 22 est logée dans l'espace 24 de sorte que par l'accouplement existant entre la manette 22 et le prisme 12 et réalisé par le point de commande 20 entrant par la fente 30 dans l'intérieur de la tête creuse 28, le pivotement de la manette 22 autour de son axe creux entre ses deux positions extrêmes fait basculer le prisme 12 autour de l'axe de rotation 19 constitué par les pivots 18 entre ses deux positions de service nommées "jour" (fig.3) et "nuit" (fig.4) respectivement.

Dans les figures 5 à 8 est représenté un rétroviseur utilisant le prisme 12 de la figure 1 dans un boîtier 10, mais un moyen de commande différent de celui représenté dans les figures 3 et 4. Le moyen de commande est formé par une coulisse 32 munie d'une projection 34 et d'une tête 36. La coulisse 32 peut être déplacée dans une glissière 38 aménagée dans le boîtier 10 sous le prisme 12 entre deux positions extrêmes 40, 42 représentées en traits continu et pointillé respectivement dans la figure 5. La glissière 38 est pourvue d'une fente 39 par laquelle passe la projection 34 et sort vers le bas pour manuellement déplacer la coulisse.

Dans la face supérieure de la tête 36 est prévue une gorge 44 oblique à la direction de déplacement de la cou - lisse indiquée par les flèches 46.

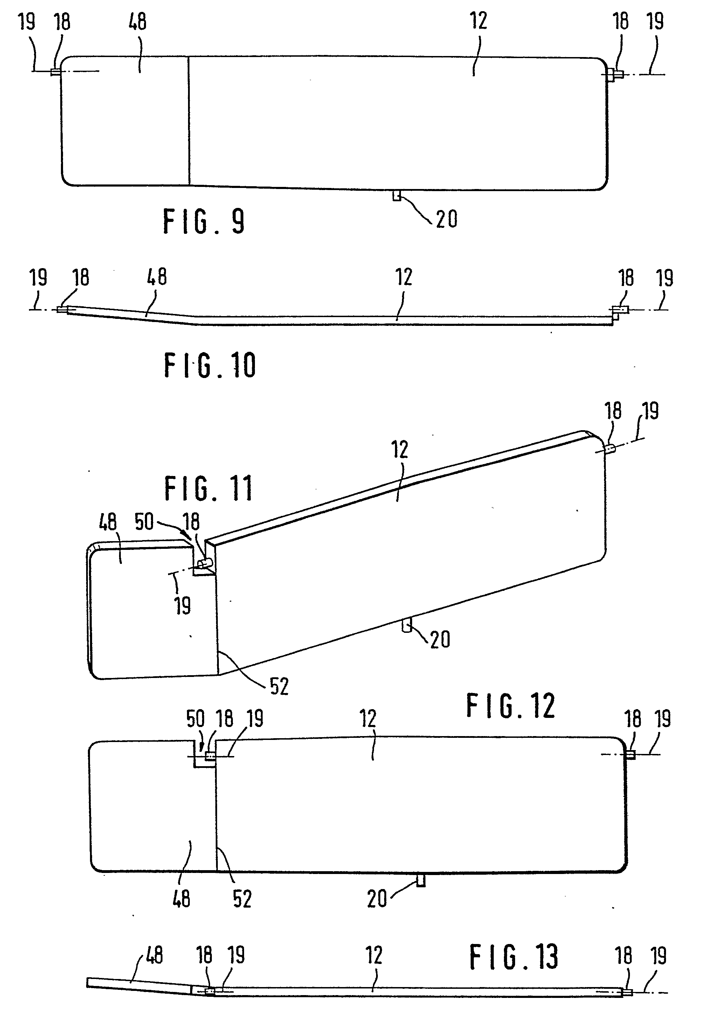

La projection ou le point de commande 20 est reçu dans la gorge 44 et lorsque la coulisse 32 est déplacée dans la glissière 38 entre ses deux positions extrêmes, l'accouplement existant entre la coulisse 32 et le prisme 12 et formé par le point de commande 20 reçu dans la gorge 44 fait basculer le prisme 12 autour de son axe de rotation 19 formé par un pivot 18 entre ses deux positions de service dites "jour" et "nuit" représentées dans les figures 8 et 7 respectivement.

Les modes de réalisation qui viennent d'être décrits se prêtent par excellence pour des rétroviseurs intérieurs sans être limités à ceux-ci. Il est évident que des moyens pour fixer le rétroviseur à l'intérieur de l'habitacle d'un véhicule doivent être prévus, ainsi que des moyens pour ajuster sa position à la taille et la position assise des différentes personnes pouvant se servir du rétroviseur. Cependant ces moyens connus ne font pas l'objet de la présente invention.

Le prisme selon l'invention peut aussi servir dans un rétroviseur extérieur fixé à la carosserie d'un véhicule. Dans ce cas il est évident qu'il est désirable d'ajuster le prisme 12 dans ses positions "jour" et "nuit" à partir de l'intérieur du véhicule. A cet effet le point de commande 20 est transféré à l'endroit d'un des pivots 18 et en particulier celui se trouvant du côté de la carosserie du véhicule et il prend la forme d'un prolongement de ce pivot 18, prolongement qui traverse la paroi de la carosserie et sort à l'intérieur dans l'habitacle du véhicule. Afin de pouvoir basculer le prisme 12 entre ses positions de service, on prévoit pour le pivot prolongé une poignée ou roue que le conducteur fait tourner pour ajuster le miroir d'une de ses positions de service dans l'autre.

Dans les figures 9 et 10 sont représentées des vues de face et d'en haut d'un autre mode de réalisation du prisme 12, dans lequel l'angle mort est réduit. A cet effet une zône latérale 48 du prisme 12 fait par exemple un petit angle vers l'arrière avec le restant du prisme 12, tel qu'on peut le voir le mieux dans la figure 10. Dans ce cas l'axe de rotation 19 est formé également par deux pivots 18, cependant le pivot 18 se trouvant du côté du prisme non plié vers l'arrière est déplacé légèrement vers l'arrière d'une distance telle que les axes des deux pivots tombent sur une ligne droite.

Un mode de réalisation supplémentaire d'un prisme 12 avec limitation de l'angle mort est représenté en perspective, vu de face et vu d'un haut dans les figures 11 à 13. De nouveau une partie latérale 48 du prisme fait un petit angle par exemple vers l'arrière par rapport au restant du prisme 12. Le pivot 18 du côté où le prisme est plié vers l'arrière se trouve dans une entaille 50 à la hauteur de la ligne de jonction 52 entre la partie repliée 48 et le restant du prisme 12.

Il est évident que dans les deux modes de réalisation du prisme 12 représenté dans les figures 9 à 13 les deux parties latérales peuvent former un léger angle vers l'arrière par rapport au restant du prisme 12. En outre la grandeur de l'angle et son orientation sont fonction du véhicule et de l'emplacement du rétroviseur comprenant le prisme 12 sur la carosserie du véhicule ou à l'intérieur de celui-ci.

Bien entendu diverses modifications peuvent être apportées par l'homme de l'art aux modes de réalisation qui viennent d'être décrits sans sortir du cadre de l'invention.

REVENDICATIONS

1. Rétroviseur avec positions jour et nuit comprenant un boîtier (10) dans lequel est logé un élément réflecteur (12), caractérisé par un prisme optique (12) de section triangulaire faisant fonction d'élément réflecteur, un axe de rotation (19) perpendiculaire à la section triangulaire du prisme et formé par deux pivots (18) faisant corps avec le corps du prisme (12) chacun sur une des bases triangulaires du prisme et un point de commande (20 ;-) faisant corps avec le prisme et situé par rapport audit axe (19) de sorte à permettre de basculer le prisme (12) entre les positions jour et nuit par application d'une force de commande audit point de commande (20;-).

2. Rétroviseur selon la revendication 1, caractérisé en ce que le point de commande (20) est une projection sur une arrête ou face du prisme opposée audit axe de rotation (19).

3. Rétroviseur selon la revendication 1 ou 2, caractérisé par une manette (22) pivotable comprenant à une extrémité un axe de rotation (28) creux parallèle audit axe de rotation (19) du prisme et muni d'une fente (30) en direction axiale, ladite manette (22) étant logée (24) dans ledit boîtier (10) de sorte que ladite fente (30) et le creux dudit axe (28) reçoivent ledit point de commande (20) et la rotation de ladite manette (22) autour de son axe de rotation (28) fait basculer ledit prisme (12) autour de son axe de rotation (19) de la position nuit dans la position jour et vice-versa.

4. Rétroviseur selon la revendication 1 ou 2, caractérisé par une coulisse (32) à commande manuelle mobile en direction de l'axe de rotation (19) du prisme entre deux positions extrêmes, et une gorge (44) dans ladite coulisse (32) oblique par rapport à la direction de déplacement de ladite coulisse (32), ladite gorge (44) recevant ledit point de commande (20).

5. Rétroviseur selon la revendication 1, caractérisé en ce que ledit point de commande (20;-) est formé par un prolongement d'un desdits pivots (18) auquel ladite force de commande est appliquée.

6. Rétroviseur selon l'une quelconque des revendications 1 à 5, caractérisé en ce que au moins une partie latérale (48)

0057154

du prisme (12) fait un léger angle avec le restant du prisme (12).

0057154

FIG. 1

FIG. 2

FIG.3

FIG.4

FIG.5

FIG.6

FIG.7

FIG.8

19 18 48 12 18 19

FIG. 9

19 18 48 12 18 19

FIG. 10

18 19

FIG. 11

48 50 18 12

19

52

FIG. 12

50 18 19 12 18 19

48 52 20

FIG. 13

48 18 19 12 18 19

0057154

Numéro de la demande

**Office européen des brevets**

**RAPPORT DE RECHERCHE EUROPEENNE**

EP 82 63 0005.5

## DOCUMENTS CONSIDERES COMME PERTINENTS

| Catégorie | Citation du document avec indication, en cas de besoin, des parties pertinentes | Revendication concernée |
|---|---|---|
| X | FR - A - 2 077 300 (COMBINED OPTICAL IN-DUSTRIES LTD.) <br> * fig. 1 * <br> -- | 1,2 |
| Y | DE - A1 - 2 647 636 (AUTOMOBILES PEUGEOT) <br> * fig. 1 * <br> & FR - A - 2 334 145 <br> -- | 3 |
| Y | DE - U - 7 139 898 (YMOS METALLWERKE) <br> * fig. 2 * <br> -- | 3 |
| A | DE - A - 2 165 226 (HAGUS METALLWAREN-WERK) <br> * fig. 3, 4 * <br> -- | 4 |
| A | GB - A - 2 025 653 (BFG GLASSGROUP) <br> * fig. 4 * <br> & FR - A - 2 430 024 <br> -- | 5 |
| A | FR - A1 - 2 266 618 (L. MATTIOLI) <br> * fig. 1 * <br> ---- | |

**CLASSEMENT DE LA DEMANDE (Int. Cl. 3)**

B 60 R 1/08

**DOMAINES TECHNIQUES RECHERCHES (Int. Cl. 3)**

B 60 R 1/08
G 02 B 7/18

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| Berlin | 16-04-1982 | FUCHS |

OEB Form 1503.1  06.78